(19) Europäisches Patentamt / European Patent Office / Office européen des brevets

(11) **EP 3 301 617 B1**

(12) **FASCICULE DE BREVET EUROPEEN**

(45) Date de publication et mention de la délivrance du brevet:
**19.05.2021 Bulletin 2021/20**

(51) Int Cl.:
**G06N 3/08** (2006.01)    **G06N 3/04** (2006.01)
**H04L 9/00** (2006.01)

(21) Numéro de dépôt: **17306310.8**

(22) Date de dépôt: **02.10.2017**

(54) **PROCÉDÉS D'APPRENTISSAGE SÉCURISÉ DE PARAMÈTRES D'UN RÉSEAU DE NEURONES À CONVOLUTION, ET DE CLASSIFICATION SÉCURISÉE D'UNE DONNÉE D'ENTRÉE**

SICHERE LERNVERFAHREN VON PARAMETERN EINES NEURONALEN NETZWERKS MIT KONVOLUTION, UND GESICHERTE KLASSIFIZIERUNG EINER EINGANGSINFORMATION

METHODS FOR SECURE LEARNING OF PARAMETERS OF A CONVOLUTIONAL NEURAL NETWORK, AND SECURE CLASSIFICATION OF INPUT DATA

(84) Etats contractants désignés:
AL AT BE BG CH CY CZ DE DK EE ES FI FR GB GR HR HU IE IS IT LI LT LU LV MC MK MT NL NO PL PT RO RS SE SI SK SM TR

(30) Priorité: **30.09.2016 FR 1659439**

(43) Date de publication de la demande:
**04.04.2018 Bulletin 2018/14**

(73) Titulaire: **Idemia Identity & Security France**
**92400 Courbevoie (FR)**

(72) Inventeurs:
• CHABANNE, Hervé
  92130 Issy-les-Moulineaux (FR)
• MILGRAM, Jonathan
  92130 Issy-les-Moulineaux (FR)
• MOREL, Constance
  92130 Issy-les-Moulineaux (FR)
• PROUFF, Emmanuel
  92445 Issy-Les-Moulineaux (FR)

(74) Mandataire: **Regimbeau**
**87 rue de Sèze**
**69477 Lyon Cedex 06 (FR)**

(56) Documents cités:
WO-A2-2016/118206

• Sergey Ioffe ET AL: "Batch Normalization: Accelerating Deep Network Training by Reducing Internal Covariate Shift", , 2 mars 2015 (2015-03-02), pages 1-11, XP055266268, Extrait de l'Internet: URL:http://arxiv.org/pdf/1502.03167v3.pdf [extrait le 2016-04-18]
• NATHAN DOWLIN ET AL: "CryptoNets: Applying Neural Networks to Encrypted Data with High Throughput and Accuracy", PROCEEDINGS OF THE 33RD INTERNATIONAL CONFERENCE ON MACHINE LEARNING, vol. 48, 20 juin 2016 (2016-06-20), pages 201-210, XP055390384,
• M. BARNI ET AL: "A privacy-preserving protocol for neural-network-based computation", ACM MULTIMEDIA, PROCEEDINGS OF THE INTERNATIONAL CONFERENCE, 26 septembre 2006 (2006-09-26), pages 146-151, XP055296362, US DOI: 10.1145/1161366.1161393 ISBN: 978-1-59593-493-2

**Description**

DOMAINE TECHNIQUE GENERAL

La présente invention concerne le domaine de l'apprentissage supervisé, et en particulier des procédé d'apprentissage sécurisé de paramètres d'un réseau de neurones à convolution, ou de classification d'une donnée d'entrée au moyen d'un réseau de neurones à convolution.

ETAT DE L'ART

Les réseaux de neurones sont massivement utilisés pour la classification de données.

Après une phase d'apprentissage automatique (généralement supervisé, c'est-à-dire sur une base de données de référence déjà classifiées), un réseau de neurones « apprend » et devient tout seul capable d'appliquer la même classification à des données inconnues.

Les réseaux de neurones à convolution, ou CNN (Convolutional Neural Networks) sont un type de réseau de neurones dans lequel le motif de connexion entre les neurones est inspiré par le cortex visuel des animaux. Ils sont ainsi particulièrement adaptés à un type particulier de classification qui est l'analyse d'image, ils permettent en effet avec efficacité la reconnaissance d'objets ou de personnes dans des images ou des vidéos, en particulier dans des applications de sécurité (surveillance automatique, détection de menace, etc.).

Aujourd'hui, les CNN donnent pleinement satisfaction, mais dans la mesure où ils sont utilisés le plus souvent sur des données sensibles et confidentielles (que ce soit les données d'apprentissages ou les données à classifier), il serait souhaitable de les sécuriser.

Plus précisément, la phase d'apprentissage permet de configurer des paramètres d'un CNN que sont des poids et des biais.

Si une entité A (par exemple un hôpital) dispose des données de référence ayant permis la phase d'apprentissage (les données des patients de l'hôpital A), et une unité B (par exemple un autre hôpital) dispose des données à classifier (le profil d'un patient pour lequel B suspecte une maladie), alors on se retrouve dans une situation dans laquelle il faudrait que :

- Soit A fournisse à B les poids et les biais déterminés par apprentissage, ce que A ne souhaite pas car cela pourrait révéler des informations sur la base d'apprentissage (ses patients) ;
- Soit B fournisse à A les données à classifier, ce que B ne souhaite pas (car cela révélerait des informations sur son patient).

De même, si l'entité A ne dispose en fait pas de la puissance de calcul suffisante pour permettre l'apprentissage des poids et biais à partir de ses données, il faudrait le demander à une entité C (par exemple un prestataire), mais A ne souhaite pas que C dispose de la base d'apprentissage ou des poids et biais déterminés.

On connait pour résoudre ce type de problème ce que l'on appelle le chiffrement homomorphique.

Plus précisément, une fonction homomorphique $\varphi$ est une fonction telle que, pour une opération de masquage M comme la multiplication par une donnée de masque a, il existe une opération O, comme l'exponentiation par a, telle que $O(\varphi(x)) = \varphi(M(x))$, c'est-à-dire $(\varphi(x))^a = \varphi(x*a)$. Une telle fonction peut également être homomorphique entre deux opérations Op1 et Op2 si effectuer l'opération Op2 sur $(\varphi(x), \varphi(y))$ permet d'obtenir $\varphi(x\ Op1\ y)$.

Un système cryptographique homomorphe permet alors d'effectuer certaines opérations mathématiques sur des données préalablement chiffrés au lieu des données en clair.

Ainsi, pour un calcul donné, il devient possible de chiffrer les données, faire certains calculs associés audit calcul donné sur les données chiffrés, et les déchiffrer, en obtenant le même résultat que si l'on avait fait ledit calcul donné directement sur les données en clair. Avantageusement le calcul associé dans le domaine chiffré est le même calcul que celui dans dans le domaine des clairs, mais pour d'autres chiffrements homomorphiques il est par exemple nécessaire de multiplier les chiffrés pour faire une addition des clairs.

On appelle un chiffrement « complètement homomorphique » (FHE, « Fully Homomorphic Encryption ») lorsqu'il permet à l'identique l'addition et la multiplication dans le domaine chiffré.

Dans le cas des réseaux de neurones, on résout le problème de sécurisation de la classification en prévoyant que :

- B met en œuvre un chiffrement homomorphique des données à classifier, et transmet ces données chiffrées à A, qui ne peut pas les lire ;
- A met en œuvre la phase de classification sur les données chiffrées et obtient le chiffré de la classification, qu'il ne peut toujours pas lire, et renvoie à B ;

- B déchiffre le résultat de la classification. Il n'a jamais pu avoir accès aux données d'apprentissage de A.

Et on résout le problème de sécurisation de l'apprentissage en prévoyant que :

- A met en œuvre un chiffrement homomorphique des données de référence de la base d'apprentissage, et transmet ces données chiffrées à C, qui ne peut pas les lire ;
- C met en œuvre la phase d'apprentissage sur les données chiffrées et obtient le chiffré des paramètres appris, qu'il ne peut toujours pas lire, et renvoie à A ;
- A déchiffre les poids et biais appris, en vue de faire de la classification pour lui-même ou B.

Cependant, un CNN contient généralement quatre types de couches traitant successivement l'information :

- la couche de convolution qui traite des blocs de l'image les uns après les autres ;
- la couche non linéaire (appelée aussi couche de correction) qui permet d'améliorer la pertinence du résultat en appliquant une « fonction d'activation » ;
- la couche de mise en commun (appelée « pooling ») qui permet de regrouper plusieurs neurones en un seul neurone ;
- la couche entièrement connectée qui relie tous les neurones d'une couche à tous les neurones de la couche précédente.

Actuellement, la fonction d'activation de couche non linéaire la plus utilisée est la fonction *ReLU* (Rectified Linear Unit, i.e. Unité de Rectification Linéaire) qui est égale à $f(x) = max(0, x)$ et la couche de pooling la plus utilisée est la fonction *MaxPool2*$\times$*2* qui correspond à un maximum entre quatre valeurs d'un carré (on met en commun quatre valeurs en une seule).

La couche de convolution, notée *CONV,* et la couche entièrement connectée, notée *FC,* correspondent généralement à un produit scalaire entre les neurones de la couche précédente et les poids du CNN.

Les architectures typiques de CNN empilent quelques paires de couches *CONV → RELU* puis ajoutent une couche *MAXPOOL* et répètent ce schéma *[(CONV → RELU)$^p$ → MAXPOOL]* jusqu'à obtenir un vecteur de sortie de taille suffisamment petite, puis terminent par deux couches entièrement connectées *FC.*

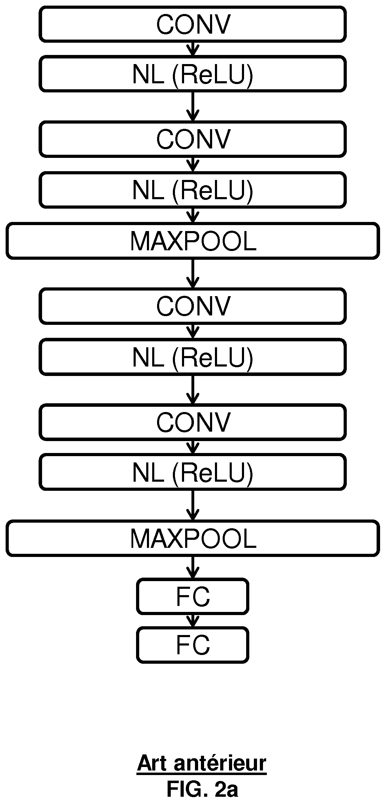

Voici une architecture CNN typique (dont un exemple est représenté par la **figure 2a**) :

$$INPUT \rightarrow [[CONV \rightarrow RELU]^p \rightarrow MAXPOOL]^n \rightarrow FC \rightarrow FC$$

Or les systèmes homomorphiques ne permettent généralement de travailler dans le domaine chiffré que pour les opérateurs + et $\times$, ce qui n'est pas le cas des fonctions principalement utilisées pour les couches non linéaire et de pooling, qui justement ne dépendent pas linéairement des paramètres d'entrée (en particulier *ReLU* et *MaxPool*).

Plusieurs solutions ont été par conséquent proposées pour rendre les CNN compatibles avec les systèmes homomorphiques.

Dans le document *Ran Gilad-Bachrach, Nathan Dowlin, Kim Laine, Kristin E. Lauter, Michael Naehrig, John Wernsing. CryptoNets: Applying Neural Networks to Encrypted Data with High Throughput and Accuracy. ICML 2016,* la fonction *MaxPool* est remplacée par une fonction *SumPool* et la fonction *ReLU* est remplacée par la fonction carrée ($f(x) = x^2$).

Outre le fait qu'on perd le bénéfice de la fonction *ReLU* qui est la plus avancée, le problème d'entrainer un CNN avec la fonction carrée est que sa dérivée n'est pas bornée. Cela peut entrainer des comportements étranges lors de l'apprentissage surtout si le CNN est profond. Cela rend les paramètres d'initialisation très sensible et donc très délicats à choisir. Par conséquent, cette méthode n'est pas optimale et limitée à des petits CNNs peu profonds.

Dans le document *Qingchen Zhang, Laurence T. Yang, and Zhikui Chen. Privacy preserving deep computation model on cloud for big data feature learning. IEEE Trans. Computers, 65(5): 1351-1362, 2016,* la fonction d'activation (*ReLU*) est remplacée par un polynôme de degré trois (approximation de Taylor de la fonction sigmoïde), et toutes les couches de pooling sont retirées. WO 2016/118206 A2 (MICROSOFT TECHNOLOGY LICENSING LLC [US]) 28 juillet 2016 (2016-07-28) décrit un réseau de neurones qui traite des données cryptées.

Cette méthode perd toujours le bénéfice de la fonction *ReLU,* mais limite quelque peu le problème de divergence qu'avait la fonction carré, même s'il est toujours présent. En revanche, la nécessité subséquente de retirer les couches de pooling rallonge fortement la durée de traitement, ce qui rend la méthode encore plus inadaptée aux grands CNNs.

Il serait par conséquent souhaitable de disposer d'une nouvelle solution d'apprentissage des paramètres d'un CNN / classification de données au moyen du CNN qui soit pleinement compatible avec le chiffrement homomorphique et ne limite pas la taille du CNN ou son efficacité.

PRESENTATION DE L'INVENTION

Selon un premier aspect, la présente invention concerne un procédé d'apprentissage sécurisé de paramètres d'un réseau de neurones à convolution, CNN, pour classification de données ;
le procédé comprenant la mise en œuvre par des moyens de traitement de données d'un premier serveur, d'étapes de :

(a0) Réception depuis un deuxième serveur d'une base de données d'apprentissage déjà classifiées, lesdites données d'apprentissage étant chiffrées de façon homomorphique ;
(a1) Apprentissage dans le domaine chiffré, à partir de ladite base de données d'apprentissage, des paramètres d'un CNN de référence comprenant au moins :

- une couche non-linéaire opérant une fonction polynomiale de degré au moins deux approximant une fonction d'activation ;
- une couche de normalisation en batch non-approximée avant chaque couche non-linéaire ;

(a2) Transmission audit deuxième serveur des paramètres appris, pour déchiffrement et utilisation en classification.

Selon une première variante d'un deuxième aspect, la présente invention concerne un procédé de classification sécurisée d'une donnée d'entrée, caractérisé en ce qu'il comprend la mise en œuvre d'étapes de :

(a) Apprentissage par des moyens de traitement de données d'un premier serveur à partir d'une base de données d'apprentissage déjà classifiées, des paramètres d'un réseau de neurones à convolution, CNN, de référence, comprenant au moins :

- une couche non-linéaire opérant une fonction polynomiale de degré au moins deux approximant une fonction d'activation ;
- une couche de normalisation en batch non-approximée avant chaque couche non-linéaire ;

(b) Réception par des moyens de traitement de données d'un deuxième serveur depuis un équipement client de ladite donnée d'entrée, chiffrée de façon homomorphique ;
(c) Classification par les moyens de traitement de données du deuxième serveur dans le domaine chiffré de ladite donnée d'entrée chiffrée, au moyen du CNN de référence ;
(d) Transmission audit équipement client du chiffré de la classification obtenue, pour déchiffrement.

Selon d'autres caractéristiques avantageuses et non limitatives :

• l'étape (a) est mise en œuvre conformément au procédé d'apprentissage sécurisé selon le premier aspect ;
• ladite fonction polynomiale approximant une fonction d'activation est déterminée avant l'apprentissage par régression polynomiale de ladite fonction d'activation à partir de points choisis aléatoirement suivant une distribution donnée ;
• ladite fonction polynomiale approximant une fonction d'activation est déterminée pendant l'apprentissage, les coefficients de ladite fonction polynomiale de degré au moins deux faisant partie des paramètres appris.

Selon une deuxième variante du deuxième aspect, la présente invention concerne un procédé de classification sécurisée d'une donnée d'entrée, caractérisé en ce qu'il comprend la mise en œuvre d'étapes de :

(a) Apprentissage par des moyens de traitement de données d'un premier serveur à partir d'une base de données d'apprentissage déjà classifiées, des paramètres d'un réseau de neurones à convolution, CNN, de référence, comprenant au moins :

- une couche non-linéaire opérant une fonction d'activation ;
- une couche de normalisation en batch non-approximée avant chaque couche non-linéaire ;
l'étape comprenant la détermination d'une fonction polynomiale de degré au moins deux approximant ladite fonction d'activation ;

(b) Réception par des moyens de traitement de données d'un deuxième serveur depuis un équipement client de ladite donnée d'entrée, chiffrée de façon homomorphique ;
(c) Classification par les moyens de traitement de données du deuxième serveur dans le domaine chiffré de ladite donnée d'entrée chiffrée, au moyen d'un CNN de substitution utilisant les paramètres appris pour le CNN de référence et comprenant à la place de chaque couche non-linéaire opérant la fonction d'activation, une couche non-linéaire opérant ladite fonction polynomiale de degré au moins deux déterminée ;

(d) Transmission audit équipement client du chiffré de la classification obtenue, pour déchiffrement.

Selon d'autres caractéristiques avantageuses et non limitatives :

- ladite fonction polynomiale est déterminée à l'étape (a) par régression polynomiale de ladite fonction d'activation à partir de points choisis aléatoirement suivant une distribution donnée ;
- l'étape (a) comprend suite à la détermination des paramètres du CNN de référence, la mise en œuvre d'au moins une itération supplémentaire d'apprentissage sur le CNN de substitution de sorte à adapter les paramètres à ladite fonction polynomiale déterminée ;
- ladite fonction polynomiale est déterminée à l'étape (a) par régression polynomiale de ladite fonction d'activation à partir de points récupérés en entrée d'une ou plusieurs couches non linéaires du CNN de référence ;
- le CNN de référence comprend une couche de convolution avant chaque couche de normalisation en batch ;
- le CNN de référence comprend au moins une couche de mise en commun opérant une fonction de type groupement moyen, après une couche non-linéaire ;
- le CNN de référence comprend au moins une couche entièrement connectée finale ;
- le CNN de référence présente une architecture $[[CONV \rightarrow BN \rightarrow NL]^p \rightarrow AVERAGEPOOL]^n \rightarrow FC \rightarrow FC$ ou $[[CONV \rightarrow BN \rightarrow POLYNOME]^p \rightarrow AVERAGEPOOL]^n \rightarrow FC \rightarrow FC$ ;
- ladite fonction d'activation est de type Unité de Rectification Linéaire, ReLU ;
- ladite fonction polynomiale est de degré deux ou trois, préférentiellement deux ;
- lesdites données d'entrée ou d'apprentissage sont représentatives d'images, ladite classification étant une reconnaissance d'objet.

Selon un troisième et un quatrième aspect, l'invention propose un produit programme d'ordinateur comprenant des instructions de code pour l'exécution d'un procédé selon le premier ou le deuxième aspect d'apprentissage sécurisé de paramètres d'un réseau de neurones à convolution, CNN, ou de classification sécurisée d'une donnée d'entrée ; et un moyen de stockage lisible par un équipement informatique sur lequel un produit programme d'ordinateur comprend des instructions de code pour l'exécution d'un procédé selon le premier ou le deuxième aspect d'apprentissage sécurisé de paramètres d'un réseau de neurones à convolution, CNN, ou de classification sécurisée d'une donnée d'entrée.

PRESENTATION DES FIGURES

D'autres caractéristiques et avantages de la présente invention apparaîtront à la lecture de la description qui va suivre d'un mode de réalisation préférentiel. Cette description sera donnée en référence aux dessins annexés dans lesquels :

- la figure 1 est un schéma d'une architecture pour la mise en œuvre des procédés selon l'invention
- les figures 2a-2c représentent trois exemples de réseaux de neurones à convolution, respectivement connu, conforme à un premier mode de réalisation de l'invention, et conforme à un deuxième mode de réalisation de l'invention.

DESCRIPTION DETAILLEE

*Architecture*

Selon deux aspects complémentaires de l'invention, sont proposés :

- des procédés d'apprentissage sécurisé de paramètres d'un réseau de neurones à convolution (CNN) pour classification de données ; et
- des procédés de classification sécurisée d'une donnée d'entrée (utilisant un CNN, avantageusement appris grâce à un des premiers procédés).

Plus précisément, l'apprentissage et/ou l'utilisation du CNN peut être sécurisée, i.e. réalisé dans le domaine chiffré, grâce à la présente invention. On verra différents modes de réalisation de ces deux types de procédés.

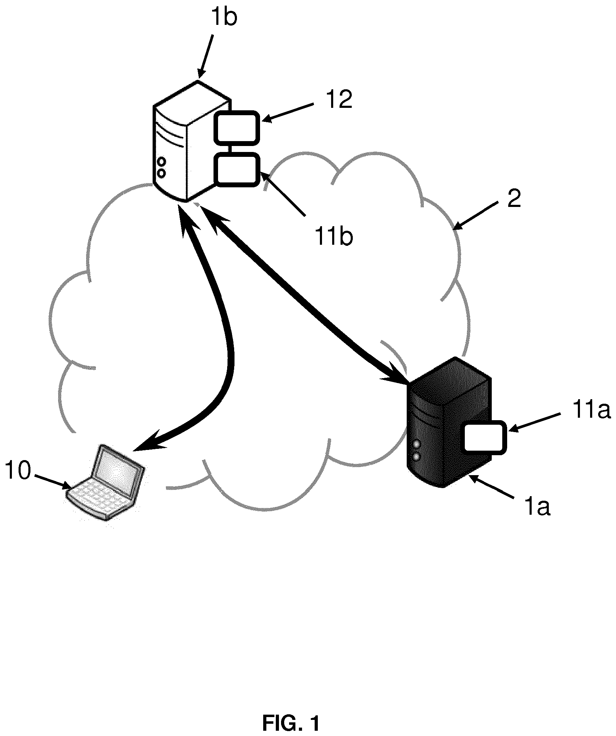

Ces deux types de procédés sont mis en œuvre au sein d'une architecture telle que représentée par la **figure 1**, grâce à un premier et/ou un deuxième serveur 1a, 1b. Le premier serveur 1a est le serveur d'apprentissage (mettant en œuvre du premier procédé) et le deuxième serveur 1b est un serveur de classification (mettant en œuvre le deuxième procédé, il dispose de la base de données d'apprentissage en clair). Il est tout à fait possible que ces deux serveurs soient confondus, mais la sécurisation offerte par la présente invention prend tout son intérêt quand ils sont distincts, i.e. quand il est souhaitable que les paramètres du CNN et/ou la base d'apprentissage ne soient pas communiquées en clair de l'un à l'autre.

Chacun de ces serveurs 1a, 1b est typiquement un équipement informatique distant relié à un réseau étendu 2 tel que le réseau internet pour l'échange des données. Chacun comprend des moyens de traitement de données 11a, 11b de type processeur (en particulier les moyens de traitement de données 11a du premier serveur ont une forte puissance de calcul, car l'apprentissage est long et complexe par rapport à la simple utilisation du CNN appris), et le cas échéant des moyens de stockage de données 12 telle qu'une mémoire informatique, par exemple un disque dur.

La mémoire 12 du deuxième serveur 1b stocke ladite base de données d'apprentissage, i.e. un ensemble de données déjà classifiées (par opposition aux données dites d'entrée que l'on cherche justement à classifier).

L'architecture comprend avantageusement un ou plusieurs équipements client 10, qui peuvent être n'importe quel poste de travail (également relié au réseau 2), préférentiellement distincts des serveurs 1a, 1b mais pouvant être confondus avec l'un et/ou l'autre d'entre eux. L'équipement client 10 dispose d'une ou plusieurs données à classifier, qu'il ne souhaite pas communiquer en clair aux serveurs 1a, 1b. Les opérateurs de l'équipement sont typiquement des « clients » au sens commercial du terme de l'opérateur du deuxième serveur 1b.

En effet, les données d'entrée ou d'apprentissage sont avantageusement représentatives d'images (ladite classification étant une reconnaissance d'objet), et on citera un exemple dans lequel l'équipement client 10 est connecté à une caméra de sécurité, et l'exploitant confie à l'opérateur la classification des images (potentiellement confidentielles) prises par la caméra.

Selon un mode de réalisation préféré (tel que représenté sur la figure 1) combinant les deux types de procédés selon l'invention, le système comprend le premier serveur 1a et l'équipement client 10 chacun connecté au deuxième équipement 1b via le réseau 20, et :

- le deuxième serveur 1b transfère au premier serveur 1a la base de données d'apprentissage chiffrée ;
- le premier serveur 1a exploite sa puissance de calcul pour mettre en œuvre un procédé d'apprentissage sécurisé de paramètres d'un CNN à partir de cette base de données d'apprentissage chiffrée, et il transmet au deuxième serveur 1b les paramètres appris du CNN eux même chiffrés ;
- le deuxième serveur 1b met en œuvre un procédé de classification sécurisée d'une donnée d'entrée transmise chiffrée depuis l'équipement client 10 grâce à un CNN utilisant les paramètres récupérés depuis le premier serveur 1a et déchiffrés ;
- le deuxième serveur 1b renvoie à l'équipement client 10 le résultat chiffré de la classification.

Mais on comprendra bien qu'il est possible de mettre en œuvre une classification sécurisée à partir d'un CNN appris de façon classique (non sécurisée) et inversement (classification classique à partir d'un CNN appris de façon sécurisée).

*Procédé d'apprentissage sécurisé*

Selon un premier aspect, est proposé le procédé d'apprentissage, mis en œuvre par les moyens de traitement de données 11a du premier serveur 1a.

Dans une première étape (a0) déjà évoquée, ils reçoivent depuis le deuxième serveur 1b la base de données d'apprentissage déjà classifiées, lesdites données d'apprentissage étant chiffrées de façon homomorphique.

De nombreuses fonctions homomorphes sont connues de l'homme du métier, et ce dernier pourra prendre celle de son choix, avantageusement une fonction « complètement homomorphique », par exemple la fonction BGV (Brakerski, Gentry et Vaikuntanathan).

Dans une étape (a1), à partir de ladite base de données d'apprentissage (chiffrée), le premier serveur apprend de façon sécurisé, c'est-à-dire directement dans le domaine chiffré comme expliqué (i.e. à partir des données d'apprentissage étant chiffrées), les paramètres d'un CNN dit de référence (par opposition à un CNN de substitution, voir plus loin) comprenant au moins :

- une couche non-linéaire (qui sera appelée « couche *POLYNOME* ») opérant une fonction polynomiale de degré au moins deux approximant une fonction d'activation ;
- une couche de normalisation en batch (qui sera appelée « couche *BN* » pour batch normalization) avant chaque couche non-linéaire *POLYNOME.*

L'idée est d'approximer la fonction d'activation (en particulier une fonction *ReLU,* mais on comprendra que d'autres fonctions d'activation sont possibles comme la fonction de Heaviside, même si dans la suite de la description on prendra l'exemple de *ReLU*) par un polynôme de degré au moins deux, avantageusement au moins trois, et encore plus avantageusement exactement deux, de sorte à créer une couche non-linéaire « de substitution » *POLYNOME,* tout en ajoutant la couche *BN* avant cette couche *POLYNOME* de sorte à avoir une distribution gaussienne centrée réduite en entrée de la couche *POLYNOME,* ce qui prévient le problème de divergence et permet une excellente approximation locale de la fonction d'activation (puisqu'on réduit le « domaine » d'approximation à cette distribution, et non plus à l'ensemble des réels), en tout cas bien meilleure qu'avec une fonction carrée ou une fonction sigmoïde comme cela avait été tenté, et ce sans nécessiter de lourds calcul (en particulier lorsque l'on reste en degré deux).

Les couches BN sont connues dans le monde des CNN mais étaient jusqu'à présent uniquement utilisées pour accélérer l'apprentissage des données (jamais à des fins de sécurité), et toujours en combinaison avec des couches non-linéaires à fonction d'activation « telle quelle » (i.e. non approximée).

La fonction polynomiale approximant la fonction d'activation cible (avantageusement *ReLU*) est déterminée :

- soit avant l'apprentissage par régression polynomiale de ladite fonction d'activation à partir de points choisis aléatoirement suivant une distribution donnée (par exemple, une distribution gaussienne centré réduite ou une distribution uniforme sur [-4 ; 4]) ;
- soit pendant l'apprentissage, les coefficients de ladite fonction polynomiale de degré au moins deux faisant partie des paramètres appris. A noter qu'un polynôme différent peut être appris par couche non linéaire.

Comme dans les CNN « non sécurisés », le CNN de référence obtenu grâce au présent procédé comprend avantageusement une couche de convolution *CONV* avant chaque couche de normalisation en batch *BN,* et ainsi un motif *[CONV → BN → POLYNOME]* est répété.

De même, le CNN de référence comprend avantageusement au moins une couche de mise en commun, opérant de façon préférentielle une fonction de type groupement moyen *AveragePool* (dite couche *AVERAGEPOOL*), après une couche non-linéaire *POLYNOME.* Il s'agit d'une différence supplémentaire par rapport aux CNN non sécurisés qui préféraient la fonction *MaxPool* après *ReLU,* et les CNN sécurisés de l'art antérieur qui proposaient d'utiliser *SumPool.* On comprendra néanmoins qu'il reste possible d'utiliser *SumPool.*

Par ailleurs, de façon classique, le CNN de référence comprend avantageusement au moins une couche entièrement connectée *FC* finale, et préférentiellement deux.

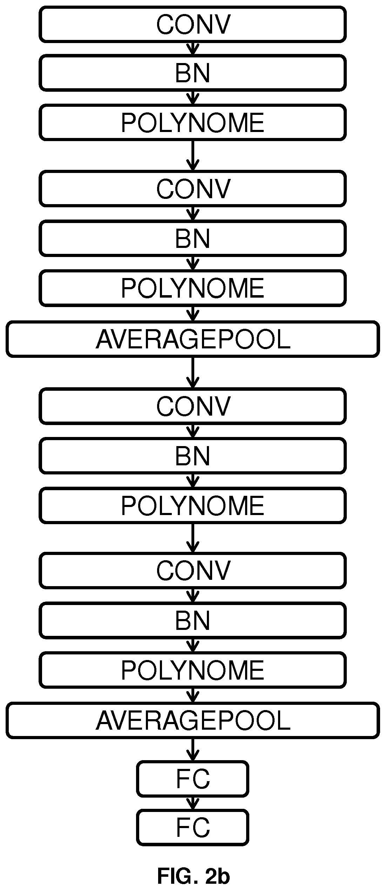

En résumé, le CNN de référence appris présente de façon préférée une architecture *[[CONV → BN → POLYNOME]$^p$ → AVERAGEPOOL]$^n$ → FC → FC* telle qu'on la voit sur la **figure 2b.**

Dans la mesure où le présent CNN de référence est compatible avec un chiffrement homomorphique, l'apprentissage en domaine chiffrée fonctionne et permet d'obtenir des paramètres eux-mêmes chiffrés du CNN. Dans une étape (a2) finale du procédé d'apprentissage, ces paramètres appris du CNN sont transmis audit deuxième serveur 1b, pour déchiffrement et utilisation en classification.

*Procédé de classification sécurisée - première variante*

Selon un deuxième aspect, est proposé le procédé de classification d'une donnée d'entrée, mis en œuvre par les moyens de traitement de données 11b du deuxième serveur 1b.

Deux variantes de ce procédé sont possible, mais dans tous les cas, le procédé de classification comprend quatre grandes étapes : dans une première étape (a) est mis en œuvre l'apprentissage d'un CNN de référence par le premier serveur 1a, dans une deuxième étape (b) est reçue depuis l'équipement client 10 ladite donnée d'entrée, chiffrée de façon homomorphique, dans une troisième étape (c) les moyens de traitement de données 11b du deuxième serveur 1b classifient dans le domaine chiffré ladite donnée d'entrée chiffrée, et enfin dans une étape (d) le chiffré de la classification obtenue est transmise audit équipement client 10 pour déchiffrement.

Selon la première variante du procédé de classification, le CNN de référence appris à l'étape (a) comprend au moins :

- une couche non-linéaire *POLYNOME* opérant une fonction polynomiale de degré au moins deux approximant une fonction d'activation (*ReLU* comme expliqué) ;
- une couche de normalisation en batch *BN* avant chaque couche non-linéaire *POLYNOME.*

En d'autres termes, dans ce mode de réalisation, le CNN de référence est conforme à un CNN obtenu via le procédé selon l'invention, à la seule différence qu'il peut être éventuellement obtenu directement dans le domaine des clairs, c'est-à-dire sans chiffrement homomorphique des données d'apprentissage. Toutefois, de façon préférée, l'apprentissage est sécurisé et conforme au procédé selon le premier aspect.

Toutes les caractéristiques optionnelles et avantages du CNN de référence décrit pour le procédé d'apprentissage sont transposables, en particulier on utilise des couches de pooling de type *AveragePool.*

Similairement, la fonction polynomiale approximant la fonction d'activation cible est déterminée :

- soit indépendamment de l'apprentissage par régression polynomiale de ladite fonction d'activation à partir de points choisis aléatoirement suivant une distribution donnée (par exemple, une distribution gaussienne centré réduite ou une distribution uniforme sur [-4 ; 4]) ;
- soit pendant l'apprentissage, les coefficients de ladite fonction polynomiale de degré au moins deux faisant partie des paramètres appris. A noter qu'un polynôme différent peut être appris par couche non linéaire.

Dans cette variante, l'étape (c) voit la classification dans le domaine chiffré de ladite donnée d'entrée chiffrée, directement au moyen du CNN de référence tel qu'appris.

*Procédé de classification sécurisée - deuxième variante*

Selon la deuxième variante du procédé de classification, le CNN de référence appris à l'étape (a) comprend au moins :

- une couche non-linéaire NL opérant une fonction d'activation (comme avant en particulier *ReLU*) ;
- une couche de normalisation en batch *BN* avant chaque couche non-linéaire *NL*.

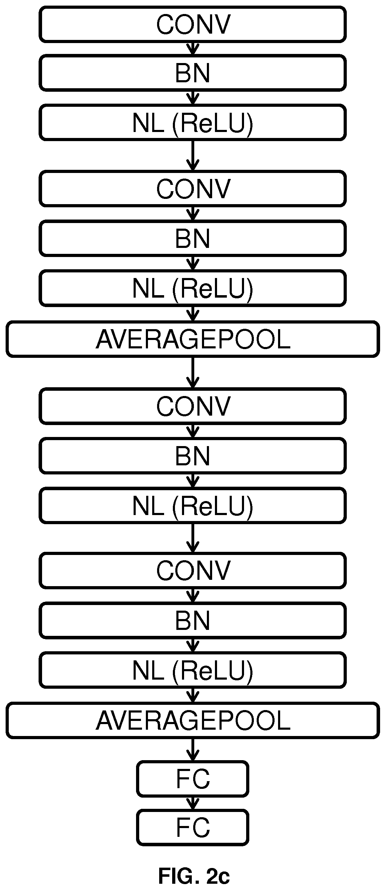

En d'autres termes, il s'agit d'un CNN traditionnel où la fonction d'activation n'est pas approximée. On comprend donc qu'un tel CNN ne peut être appris par le procédé selon le premier aspect de l'invention, et ne peut pas être utilisé dans le domaine chiffré.
Cependant, à cette différence près, toutes les caractéristiques optionnelles et avantages du CNN de référence décrit pour le procédé d'apprentissage sont transposables, en particulier on utilise des couches de pooling de type *AveragePool.*
En résumé, le CNN de référence appris pour cette variante présente de façon préférée une architecture *[[CONV → BN → NL]$^p$ → AVERAGEPOOL]$^n$ → FC → FC* telle qu'on la voit sur la **figure 2c.**
Toutefois, l'étape (a) comprend également la détermination de la fonction polynomiale de degré au moins deux approximant ladite fonction d'activation. En effet, en l'état, le CNN de référence n'est pas compatible avec un chiffrement homomorphique.
Pour cela :

- soit comme dans la première variante la fonction polynomiale est déterminée à l'étape (a) par régression polynomiale de ladite fonction d'activation à partir de points choisis aléatoirement suivant une distribution donnée, par exemple, une distribution gaussienne centrée réduite ou une distribution uniforme sur [-4 ; 4],
- soit ladite fonction polynomiale est déterminée à l'étape (a) par régression polynomiale de ladite fonction d'activation à partir de points récupérés en entrée d'une ou plusieurs couches non linéaires *NL* du CNN de référence.

Dans le premier cas, le polynôme est à nouveau appris indépendamment de la base d'apprentissage.
Dans le second cas le polynôme peut être soit global (on récupère les entrées de toutes les couches *NL* sur la base d'apprentissage pour le CNN de référence et on fait la régression polynomiale sur cette distribution), soit associé à une couche et dans ce dernier cas on obtient un polynôme par couche non-linéaire approximant la fonction d'activation de la couche (pour chaque couche *NL* on récupère les entrées de cette couche sur la base d'apprentissage pour le CNN de référence et on fait pour chaque couche *NL* la régression polynomiale sur la distribution de cette couche).
Ensuite, dans cette variante, l'étape (c) voit la classification dans le domaine chiffré de ladite donnée d'entrée chiffrée, au moyen d'un CNN de dit substitution, qui lui est compatible avec le chiffrement homomorphique.
Le CNN de substitution utilise les paramètres appris pour le CNN de référence et comprend à la place de chaque « vraie » couche non-linéaire NL opérant la fonction d'activation, une couche non-linéaire *POLYNOME* opérant ladite fonction polynomiale de degré au moins deux déterminée (de façon globale ou déterminée pour cette couche *NL*).
En d'autres termes, chaque couche *POLYNOME* est une couche de substitution d'une couche *NL*. A titre d'exemple, pour un CNN de référence une architecture présentant l'architecture *[[CONV → BN → NL]$^p$ → AVERAGE-POOL]$^n$ → FC → FC* évoquée précédemment, le CNN de substitution correspondant présente l'architecture *[[CONV → BN → POLYNOME]$^p$ → AVERAGEPOOL]$^n$ → FC → FC* telle qu'on la voit sur la figure 2b.
Le CNN de substitution obtenu est alors similaire à un CNN de référence tel utilisé par la première variante du procédé de classification sécurisée, et/ou qu'il pourrait être obtenu via le procédé d'apprentissage sécurisée selon le premier aspect.
A noter que préalablement à la classification, l'étape (a) peut comprendre de façon préférée suite à la détermination des paramètres du CNN de référence, la mise en œuvre d'au moins une itération supplémentaire d'apprentissage sur le CNN de substitution de sorte à adapter les paramètres à ladite fonction polynomiale déterminée.

*Produit programme d'ordinateur*

Selon un troisième et un quatrième aspects, l'invention concerne un produit programme d'ordinateur comprenant des instructions de code pour l'exécution (en particulier sur les moyens de traitement de données 11a, 11b du premier ou du deuxième serveur 1a, 1b) d'un procédé selon le premier aspect de l'invention d'apprentissage sécurisé de paramètres d'un CNN ou un procédé selon le deuxième aspect de l'invention de classification sécurisée d'une donnée d'entrée, ainsi que des moyens de stockage lisibles par un équipement informatique (une mémoire du premier ou deuxième serveur 1a, 1b) sur lequel on trouve ce produit programme d'ordinateur.

**Revendications**

1. Procédé d'apprentissage sécurisé de paramètres d'un réseau de neurones à convolution, CNN, pour classification de données ;
le procédé comprenant la mise en œuvre par des moyens de traitement de données (11a) d'un premier serveur (1a), d'étapes de :

   (a0) Réception depuis un deuxième serveur (1b) d'une base de données d'apprentissage déjà classifiées, lesdites données d'apprentissage étant chiffrées de façon homomorphique ;
   (a1) Apprentissage dans le domaine chiffré, à partir de ladite base de données d'apprentissage, des paramètres d'un CNN de référence comprenant au moins :

      - une couche non-linéaire (POLYNOME) opérant une fonction polynomiale de degré au moins deux approximant une fonction d'activation ;
      - une couche de normalisation en batch (BN) non-approximée avant chaque couche non-linéaire (POLYNOME) ;

   (a2) Transmission audit deuxième serveur (1b) des paramètres appris, pour déchiffrement et utilisation en classification.

2. Procédé de classification sécurisée d'une donnée d'entrée, **caractérisé en ce qu'**il comprend la mise en œuvre d'étapes de :

   (a) Apprentissage par des moyens de traitement de données (11a) d'un premier serveur (1a) à partir d'une base de données d'apprentissage déjà classifiées, des paramètres d'un réseau de neurones à convolution, CNN, de référence, comprenant au moins :

      - une couche non-linéaire (POLYNOME) opérant une fonction polynomiale de degré au moins deux approximant une fonction d'activation ;
      - une couche de normalisation en batch (BN) non-approximée avant chaque couche non-linéaire (POLYNOME) ;

   (b) Réception par des moyens de traitement de données (11b) d'un deuxième serveur (1b) depuis un équipement client (10) de ladite donnée d'entrée, chiffrée de façon homomorphique ;
   (c) Classification par les moyens de traitement de données (11) du deuxième serveur (1b) dans le domaine chiffré de ladite donnée d'entrée chiffrée, au moyen du CNN de référence ;
   (d) Transmission audit équipement client (10) du chiffré de la classification obtenue, pour déchiffrement.

3. Procédé de classification sécurisée selon la revendication 2, dans lequel l'étape (a) comprend la mise en œuvre du procédé d'apprentissage sécurisé selon la revendication 1.

4. Procédé selon l'une des revendications 1 à 3, dans lequel ladite fonction polynomiale est soit déterminée avant l'apprentissage par régression polynomiale de ladite fonction d'activation à partir de points choisis aléatoirement suivant une distribution donnée ; soit déterminée pendant l'apprentissage, les coefficients de ladite fonction polynomiale de degré au moins deux faisant partie des paramètres appris.

5. Procédé de classification sécurisée d'une donnée d'entrée, **caractérisé en ce qu'**il comprend la mise en œuvre d'étapes de :

(a) Apprentissage par des moyens de traitement de données (11a) d'un premier serveur (1a) à partir d'une base de données d'apprentissage déjà classifiées, des paramètres d'un réseau de neurones à convolution, CNN, de référence, comprenant au moins :

- une couche non-linéaire (NL) opérant une fonction d'activation ;
- une couche de normalisation en batch (BN) non-approximée avant chaque couche non-linéaire (NL) ;
l'étape comprenant la détermination d'une fonction polynomiale de degré au moins deux approximant ladite fonction d'activation ;

(b) Réception par des moyens de traitement de données (11b) d'un deuxième serveur (1b) depuis un équipement client (10) de ladite donnée d'entrée, chiffrée de façon homomorphique ;
(c) Classification par les moyens de traitement de données (11) du deuxième serveur (1b) dans le domaine chiffré de ladite donnée d'entrée chiffrée, au moyen d'un CNN de substitution utilisant les paramètres appris pour le CNN de référence et comprenant à la place de chaque couche non-linéaire (NL) opérant la fonction d'activation, une couche non-linéaire (POLYNOME) opérant ladite fonction polynomiale de degré au moins deux déterminée ;
(d) Transmission audit équipement client (10) du chiffré de la classification obtenue, pour déchiffrement.

6. Procédé selon la revendication 5, dans lequel ladite fonction polynomiale est déterminée à l'étape (a) par régression polynomiale de ladite fonction d'activation à partir de points soit choisis aléatoirement suivant une distribution donnée ; soit récupérés en entrée d'une ou plusieurs couches non linéaires (NL) du CNN de référence.

7. Procédé selon la revendication 6, dans lequel l'étape (a) comprend suite à la détermination des paramètres du CNN de référence, la mise en œuvre d'au moins une itération supplémentaire d'apprentissage sur le CNN de substitution de sorte à adapter les paramètres à ladite fonction polynomiale déterminée.

8. Procédé selon l'une des revendications 1 à 7, dans lequel le CNN de référence comprend une couche de convolution (CONV) avant chaque couche de normalisation en batch (BN).

9. Procédé selon l'une des revendications 1 à 8, dans lequel le CNN de référence comprend au moins une couche de mise en commun opérant une fonction de type groupement moyen (AVERAGEPOOL), après une couche non-linéaire (NL, POLYNOME).

10. Procédé selon l'une des revendications 1 à 9, dans lequel le CNN de référence comprend au moins une couche entièrement connectée (FC) finale.

11. Procédé selon l'une des revendications 1 à 10, dans laquelle le CNN de référence présente une architecture $[[CONV \rightarrow BN \rightarrow NL]^p \rightarrow AVERAGEPOOL]^n \rightarrow FC \rightarrow FC$ ou $[[CONV \rightarrow BN \rightarrow POLYNOME]^p \rightarrow AVERAGEPOOL]^n \rightarrow FC \rightarrow FC$, où $AVERAGEPOOL$ est une couche de mise en commun opérant une fonction de type groupement moyen, $FC$ une couche entièrement connectée, $NL$ est une couche non-linéaire opérant une fonction d'activation, $POLYNOME$ est une couche non-linéaire opérant une fonction polynomiale de degré au moins deux approximant une fonction d'activation, et $n$ et $p$ sont des entiers positifs.

12. Procédé selon l'une des revendications 1 à 11, dans lequel ladite fonction d'activation est de type Unité de Rectification Linéaire, ReLU.

13. Procédé selon l'une des revendications 1 à 12, dans lequel ladite fonction polynomiale est de degré deux ou trois, préférentiellement deux.

14. Produit programme d'ordinateur comprenant des instructions de code qui, lorsqu'elles sont exécutées par un équipement informatique comprenant un premier serveur et un deuxième serveur, conduisent le premier serveur et le deuxième serveur à mettre en œuvre un procédé selon l'une des revendications 1 à 13.

15. Moyen de stockage lisible par un équipement informatique, l'équipement informatique comprenant un premier serveur et un deuxième serveur, le moyen de stockage comprenant un produit programme d'ordinateur qui comprend

EP 3 301 617 B1

des instructions de code qui, lorsqu'elles sont exécutées par l'équipement informatique, conduisent le premier serveur et le deuxième serveur à mettre en œuvre un procédé selon l'une des revendications 1 à 13.

**Patentansprüche**

1. Gesichertes Lernverfahren von Parametern eines neuronalen Netzwerks mit Konvolution, CNN, zur Datenklassifizierung;
   wobei das Verfahren die Durchführung, durch Datenverarbeitungsmittel (11a) eines ersten Servers (1a), von Schritten umfasst:

   (a0) Empfangen, von einem zweiten Server (1b), einer Datenbank mit bereits klassifizierten Lerndaten, wobei die Lerndaten homomorphisch verschlüsselt sind;
   (a1) Erlernen, im verschlüsselten Bereich auf der Basis von Lerndaten, der Parameter eines Referenz-CNN, umfassend mindestens:

   - eine nicht-lineare Schicht (POLYNOME), die eine Polynomfunktion von mindestens Grad zwei betreibt, die eine Aktivierungsfunktion approximiert;
   - eine nicht-approximierte Batch-Normalisierungsschicht (BN) vor jeder nicht-linearen Schicht (POLYNOME);

   (a2) Übertragen der gelernten Parameter an den zweiten Server (1b) zwecks Entschlüsselung und Verwendung bei der Klassifizierung.

2. Gesichertes Klassifizierungsverfahren eines Eingangs-Datenelements, **dadurch gekennzeichnet, dass** es die Durchführung von Schritten umfasst:

   (a) Erlernen, durch Datenverarbeitungsmittel (11a) eines ersten Servers (1a), auf der Basis einer Datenbank mit bereits klassifizierten Lerndaten, der Parameter eines neuronalen Referenz-Netzwerks mit Konvolution CNN, umfassend mindestens:

   - eine nicht-lineare Schicht (POLYNOME), die eine Polynomfunktion von mindestens Grad zwei betreibt, die eine Aktivierungsfunktion approximiert;
   - eine nicht-approximierte Batch-Normalisierungsschicht (BN) vor jeder nicht-linearen Schicht (POLYNOME);

   (b) Empfangen, durch Datenverarbeitungsmittel (11b) eines zweiten Servers (1b), des homomorphisch verschlüsselten Eingangs-Datenelements von einer Client-Ausrüstung (10);
   (c) Klassifizieren, durch die Datenverarbeitungsmittel (11) des zweiten Servers (1b) im verschlüsselten Bereich, des verschlüsselten Eingangs-Datenelements mittels des Referenz-CNN;
   (d) Übertragen der Verschlüsselung der erhaltenen Klassifizierung an die Client-Ausrüstung (10) zwecks Entschlüsselung.

3. Gesichertes Klassifizierungsverfahren nach Anspruch 2, wobei der Schritt (a) die Durchführung des gesicherten Lernverfahrens nach Anspruch 1 umfasst.

4. Verfahren nach einem der Ansprüche 1 bis 3, wobei die Polynomfunktion entweder vor dem Lernen durch polynomiale Regression der Aktivierungsfunktion auf der Basis von zufällig gewählten Punkten gemäß einer bestimmten Verteilung bestimmt wird; oder während des Lernens bestimmt wird, wobei die Koeffizienten der Polynomfunktion von mindestens Grad zwei Teil der gelernten Parameter sind.

5. Gesichertes Klassifizierungsverfahren eines Eingangs-Datenelements, **dadurch gekennzeichnet, dass** es die Durchführung von Schritten umfasst:

   (a) Erlernen, durch Datenverarbeitungsmittel (11a) eines ersten Servers (1a) auf der Basis einer Datenbank mit bereits klassifizierten Lerndaten, der Parameter eines neuronalen Referenz-Netzwerks mit Konvolution CNN, umfassend mindestens:

- eine nicht-lineare Schicht (NL), die eine Aktivierungsfunktion betreibt;
- eine nicht-approximierte Batch-Normalisierungsschicht (BN) vor jeder nicht-linearen Schicht (NL);
wobei der Schritt die Bestimmung einer Polynomfunktion von mindestens Grad zwei umfasst, die die Aktivierungsfunktion approximiert;

(b) Empfangen, durch Datenverarbeitungsmittel (11b) eines zweiten Servers, (1b) des homomorphisch verschlüsselten Eingangs-Datenelements von einer Client-Ausrüstung (10);
(c) Klassifizieren, durch die Datenverarbeitungsmittel (11) des zweiten Servers (1b) im verschlüsselten Bereich, des verschlüsselten Eingangs-Datenelements mittels eines Substitutions-CNN unter Verwendung der gelernten Parameter für das Referenz-CNN und umfassend anstelle jeder nicht-lineare Schicht (NL), die die Aktivierungsfunktion betreibt, einer nicht-linearen Schicht (POLYNOME), die die bestimmte Polynomfunktion von mindestens Grad zwei betreibt;
(d) Übertragen der Verschlüsselung der erhaltenen Klassifizierung an die Client-Ausrüstung (10) zwecks Entschlüsselung.

6. Verfahren nach Anspruch 5, wobei die Polynomfunktion in Schritt (a) durch polynomiale Regression der Aktivierungsfunktion auf der Basis von Punkten bestimmt wird, die entweder zufällig nach einer gegebenen Verteilung ausgewählt sind oder bei Eintritt in eine oder mehrere nicht-lineare Schichten (NL) des Referenz-CNN wiederhergestellt werden.

7. Verfahren nach Anspruch 6, wobei der Schritt (a) nach Bestimmung der Parameter des Referenz-CNN die Durchführung von mindestens einer zusätzlichen Lerniteration auf dem Substitutions-CNN derart umfasst, dass die Parameter an die bestimmte Polynomfunktion angepasst werden.

8. Verfahren nach einem der Ansprüche 1 bis 7, wobei das Referenz-CNN vor jeder Batch-Normalisierungsschicht (BN) eine Konvolutionsschicht (CONV) umfasst.

9. Verfahren nach einem der Ansprüche 1 bis 8, wobei die Referenz-CNN mindestens eine Vereinheitlichungsschicht umfasst, die nach einer nicht-linearen Schicht (NL, POLYNOME) eine Funktion vom Typ mittlere Gruppierung (AVERAGEPOOL) betreibt.

10. Verfahren nach einem der Ansprüche 1 bis 9, wobei das Referenz-CNN mindestens eine vollständig verbundene Endschicht (FC) umfasst.

11. Verfahren nach einem der Ansprüche 1 bis 10, wobei das Referenz-CNN eine Architektur $[[CONV \rightarrow BN \rightarrow NL]^p \rightarrow AVERAGEPOOL]^n \rightarrow FC \rightarrow FC$ oder $[[CONV \rightarrow BN \rightarrow POLYNOME]^p \rightarrow AVERAGEPOOL]^n \rightarrow FC \rightarrow FC$ aufweist, wobei AVERAGEPOOL eine Vereinheitlichungsschicht ist, die eine Funktion vom Typ mittlere Gruppierung betreibt, FC eine vollständig verbundene Schicht ist, NL eine nicht-lineare Schicht ist, die eine Aktivierungsfunktion betreibt, POLYNOME eine nicht-lineare Schicht ist, die eine Polynomfunktion von mindestens Grad zwei betreibt, die eine Aktivierungsfunktion approximiert, und $n$ und $p$ positive Ganzzahlen sind.

12. Verfahren nach einem der Ansprüche 1 bis 11, wobei die Aktivierungsfunktion vom Typ Rectified Linear Unit, ReLU, ist.

13. Verfahren nach einem der Ansprüche 1 bis 12, wobei die Polynomfunktion von Grad zwei oder drei ist, vorzugsweise zwei.

14. Rechnerprogrammprodukt, umfassend Codebefehle, die, wenn sie von einer IT-Ausrüstung ausgeführt werden, die einen ersten Server und einen zweiten Server umfasst, den ersten Server und den zweiten Server veranlassen, ein Verfahren nach einem der Ansprüche 1 bis 13 durchzuführen.

15. Speichermittel, das von einer IT-Ausrüstung lesbar ist, wobei die IT-Ausrüstung einen ersten Server und einen zweiten Server umfasst, wobei das Speichermittel ein Rechnerprogrammprodukt umfasst, das Codebefehle umfasst, die, wenn sie von der IT-Ausrüstung ausgeführt werden, den ersten Server und den zweiten Server veranlassen, ein Verfahren nach einem der Ansprüche 1 bis 13 durchzuführen.

**Claims**

1.  A method for securely learning parameters of a convolutional neural network, CNN, for data classification; the method comprising the implementation, by means for processing data (11a) of a first server (1a), of steps of:

    (a0) Receiving, from a second server (1b), an already classified learning database, said learning data being homomorphically encrypted;
    (a1) Learning in the encrypted domain, from said learning database, the parameters of a reference CNN comprising at least:

    - a non-linear layer (POLYNOME) operating a polynomial function of at least degree two approximating an activation function;
    - a non-approximated batch normalization layer (BN) before each non-linear layer (POLYNOME);

    (a2) Transmitting, to said second server (1b), learned parameters for decryption and use in classification.

2.  A method for securely classifying an input data, **characterized in that** it comprises the implementation of steps of:

    (a) Learning, by means for processing data (11a) of a first server (1a) from an already classified learning database, the parameters of a reference convolutional neural network, CNN, comprising at least:

    - a non-linear layer (POLYNOME) operating a polynomial function of at least degree two approximating an activation function;
    - a non-approximated batch normalization layer (BN) before each non-linear layer (POLYNOME);

    (b) Receiving, by means for processing data (11b) of a second server (1b) from client equipment (10), said input data homomorphically encrypted;
    (c) Classifying, by the means for processing data (11) of the second server (1b), in the encrypted domain, said encrypted input data by means of the reference CNN;
    (d) Transmitting, to said client equipment (10), the cipher of the obtained classification, for decryption.

3.  The secure classification method according to claim 2, wherein step (a) comprises the implementation of the secure learning method according to claim 1.

4.  The method according to any of claims 1 to 3, wherein said polynomial function is either determined before learning by polynomial regression of said activation function from points chosen randomly according to a given distribution; or determined during learning, the coefficients of said polynomial function of at least degree two being part of the learned parameters.

5.  A method for securely classifying an input data, **characterized in that** it comprises the implementation of steps of:

    (a) Learning, by means for processing data (11a) of a first server (1a) from an already classified learning database, the parameters of a reference convolutional neural network, CNN, comprising at least:

    - a non-linear layer (NL) operating an activation function;
    - a non-approximated batch normalization layer (BN) before each non-linear layer (NL);
    the step comprising the determination of a polynomial function of at least degree two approximating said activation function;

    (b) Receiving, by means for processing data (11b) of a second server (1b) from client equipment (10), said input data, homomorphically encrypted;
    (c) Classifying, by the means for processing data (11) of the second server (1b), in the encrypted domain, said encrypted input data by means of a substitute CNN using the parameters learned for the reference CNN and comprising, instead of each non-linear layer (NL) operating the activation function, a non-linear layer (POLYNOME) operating said determined polynomial function of at least degree two;
    (d) Transmitting, to said client equipment (10), the cipher of the obtained classification, for decryption.

6.  The method according to claim 5, wherein said polynomial function is determined in step (a) by polynomial regression of said activation function from points either chosen randomly according to a given distribution; or recovered at the input of one or several non-linear layer(s) (NL) of the reference CNN.

7. The method according to claim 6, wherein step (a) comprises, following the determination of the parameters of the reference CNN, the implementation of at least one additional iteration of learning on the substitute CNN so as to adapt the parameters to said determined polynomial function.

8. The method according to any of claims 1 to 7, wherein the reference CNN comprises a convolution layer (CONV) before each batch normalization layer (BN).

9. The method according to any of claims 1 to 8, wherein the reference CNN comprises at least one pooling layer operating an average grouping type function (AVERAGEPOOL), after a non-linear layer (NL, POLYNOME).

10. The method according to any of claims 1 to 9, wherein the reference CNN comprises at least one final fully connected layer (FC).

11. The method according to any of claims 1 to 10, wherein the reference CNN has an architecture *[[CONV $\rightarrow$ BN $\rightarrow$ NL]$^p$ $\rightarrow$ AVERAGEPOOL]$^n$ $\rightarrow$ FC $\rightarrow$ FC or [[CONV $\rightarrow$ BN $\rightarrow$ POLYNOME]$^p$ $\rightarrow$ AVERAGEPOOL]$^n$ $\rightarrow$ FC $\rightarrow$ FC,* where AVERAGEPOOL is a pooling layer operating an average grouping type function, FC is a fully connected layer, NL is a non-linear layer operating an activation function, POLYNOME is a non-linear layer operating a polynomial function of at least degree two approximating an activation function and $n$ and $p$ are positive integers.

12. The method according to any of claims 1 to 11, wherein said activation function is of the Rectified Linear Unit, ReLU, type.

13. The method according to any of claims 1 to 12, wherein said polynomial function is of degree two or three, preferably two.

14. A computer program product comprising code instructions which, when executed by computer equipment comprising a first server and a second server, cause the first server and the second server to implement a method according to any of claims 1 to 13.

15. A storage medium readable by computer equipment, the computer equipment comprising a first server and a second server, the storage medium comprising a computer program product which comprises code instructions which, when executed by the computer equipment, cause the first server and the second server to implement a method according to any of claims 1 to 13.

FIG. 1

**Art antérieur**
**FIG. 2a**

FIG. 2b

```
              ┌──────────────────────┐
              │         CONV         │
              └──────────────────────┘
                         ↓
              ┌──────────────────────┐
              │          BN          │
              └──────────────────────┘
                         ↓
              ┌──────────────────────┐
              │       NL (ReLU)      │
              └──────────────────────┘
                         ↓
              ┌──────────────────────┐
              │         CONV         │
              └──────────────────────┘
                         ↓
              ┌──────────────────────┐
              │          BN          │
              └──────────────────────┘
                         ↓
              ┌──────────────────────┐
              │       NL (ReLU)      │
              └──────────────────────┘
                         ↓
          ┌──────────────────────────────┐
          │         AVERAGEPOOL          │
          └──────────────────────────────┘
                         ↓
              ┌──────────────────────┐
              │         CONV         │
              └──────────────────────┘
                         ↓
              ┌──────────────────────┐
              │          BN          │
              └──────────────────────┘
                         ↓
              ┌──────────────────────┐
              │       NL (ReLU)      │
              └──────────────────────┘
                         ↓
              ┌──────────────────────┐
              │         CONV         │
              └──────────────────────┘
                         ↓
              ┌──────────────────────┐
              │          BN          │
              └──────────────────────┘
                         ↓
              ┌──────────────────────┐
              │       NL (ReLU)      │
              └──────────────────────┘
                         ↓
          ┌──────────────────────────────┐
          │         AVERAGEPOOL          │
          └──────────────────────────────┘
                         ↓
                  ┌──────────────┐
                  │      FC      │
                  └──────────────┘
                         ↓
                  ┌──────────────┐
                  │      FC      │
                  └──────────────┘
```

FIG. 2c

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2016118206 A2

**Littérature non-brevet citée dans la description**

- **QINGCHEN ZHANG ; LAURENCE T. YANG ; ZHIKUI CHEN.** Privacy preserving deep computation model on cloud for big data feature learning. *IEEE Trans. Computers,* 2016, vol. 65 (5), 1351-1362